# FASCICULE DE BREVET EUROPEEN

(11) **EP 0 955 255 B1**
(45) Date de publication et mention de la délivrance du brevet: **11.12.2002**
(21) Numéro de dépôt: 99401103.9
(22) Date de dépôt: 05.05.1999
(51) Int. Cl.: B65G 65/46

(54) **Dispositif extracteur à vis sans fin, pourvu de moyens d'entraînement en rotation améliorée**
Schneckenaustragsvorrichtung mit verbessertem Drehantrieb
Screw discharge device with an improved rotary drive

(30) Priorité: 07.05.1998 FR 9805787
(43) Date de publication de la demande: 10.11.1999
(73) Titulaire: Starvrac S.A., 62690 Hermaville (FR)
(72) Inventeur: Ramboz, Maurice, 39100 Dole (FR)
(74) Mandataire: Wagret, Frédéric

(56) Documents cités:
- FR-A- 2 341 506
- FR-A- 2 626 262

## Description

La présente invention concerne un dispositif extracteur selon le préambule de la revendication 1.

On connaît, par l'intermédiaire de la demande de brevet français FR-2 626 262, un extracteur pour silo de stockage présentant une jupe tournante qui entraîne dans sa rotation la vis d'extraction ainsi que son moteur d'entraînement, ladite jupe permettant d'isoler le moteur de la matière granuleuse. La jupe repose sur un palier composé d'une couronne fixe solidaire du fond du silo et d'une autre tournante, et supporte un cône de protection.

La famille des dispositifs d'extraction à laquelle appartient la présente invention est décrite dans la demande de brevet numéro FR-A- 76 05688.

Ce type d'extracteur connu donne satisfaction, mais il est susceptible d'être amélioré.

En effet, la grande quantité de matières stockées crée sur le bâti en forme de U, des forces et contraintes très élevées, qui tendent à déformer le bâti, notamment en déformant vers le bas la branche supérieure horizontale du U renversé.

Or, le carter selon l'art antérieur, décrit dans le brevet ci-dessus, est fixé sur les branches du U par l'intermédiaire de pivots associés à des paliers.

La déformation du bâti mentionnée précédemment entraîne, on le comprend, des efforts très importants sur les pivots et le palier, qui créent des forces de frottement élevées. Ces dernières obligent à augmenter la puissance des moteurs, et en outre créent des risques d'échauffement et de bris, ce qui fragilise le mécanisme d'entraînement. Les forces de frottement peuvent être telles qu'elles provoquent le blocage du carter. Les vis ne sont alors plus entraînées en rotation autour de l'axe vertical du silo, mais tournent uniquement sur elles-mêmes, ce qui entraîne l'évacuation de la matière vers l'orifice, uniquement au droit de chaque vis. Il se forme ainsi un prisme triangulaire centré sur la vis, dans le tas de matière stockée. Dans le cas d'un silo, ce prisme vide, par rapport au reste du silo rempli de matière, crée des contraintes différentielles dans le silo, qui tendent à ovaliser celui-ci. Ces contraintes sont néfastes et dangereuses. La difficulté est d'autant plus grande que l'opérateur n'est pas souvent en mesure de détecter un tel blocage du carter, du fait que la matière continue à être évacuée, au moins pendant un temps, selon le processus expliqué ci-dessus.

La présente invention vise à remédier à cet inconvénient et propose, selon un premier aspect, un dispositif qui permette d'assurer l'entraînement du carter dans toutes les situations, en réduisant les frottements au maximum.

Par ailleurs, les moyens d'entraînement en rotation du carter, selon l'art antérieur défini par le brevet ci-dessus, sont relativement encombrants et fragiles, étant constitués de différents mécanismes coopérant les uns avec les autres. Egalement du fait de la déformation du bâti, l'entraînement du carter risque de ne plus être assuré de manière optimale.

Dans ce contexte, selon son second aspect, l'invention vise à proposer des moyens d'entraînement du carter en rotation autour de son propre axe, qui soient fiables et évitent les blocages.

A cette fin, selon l'invention, l'ensemble extracteur pour matières solides, pulvérulentes ou en grains, stockées sur une aire ou dans un silo, comprend au moins une vis sans fin destinée à évacuer la matière vers un orifice d'évacuation central au-dessus duquel est disposé un bâti en forme générale de U renversé à 90° et entre les branches horizontales duquel est disposé un carter associé à des premiers moyens d'entraînement de la vis en rotation autour de son axe, et sur lequel la vis est fixée, le carter et la vis étant entraînés en rotation autour d'un axe vertical par des seconds moyens d'entraînement. Ledit carter repose par sa base sur la branche horizontale inférieure du bâti en forme générale de U renversé à 90°, par l'intermédiaire d'une couronne reliée à ladite branche par des moyens autorisant le mouvement de rotation de l'ensemble vis/carter.

Selon l'invention, le carter est maintenu en sa partie supérieure, par rapport à la branche supérieure du bâti en forme générale de U renversé à 90°, par des moyens de guidage, autorisant un léger débattement différentiel du carter par rapport à ladite branche, selon une direction sensiblement axiale verticale.

De préférence, le carter dépasse par rapport au plan formé par la branche supérieure du bâti en forme générale de U renversé à 90° que traverse une ouverture dont les bords sont pourvus desdits guides.

Dans une forme préférée, les seconds moyens d'entraînement comportent un moteur et un mécanisme d'entraînement associés à la couronne.

De préférence, la couronne est dentelée et coopère avec un engrenage lui-même associé audit moteur.

L'invention sera bien comprise à la lumière de la description qui suit se rapportant à un exemple illustratif et non limitatif, en référence aux dessins annexés dans lesquels
- La figure 1 est une vue de dessus schématique de l'ensemble d'extraction disposé dans un silo;
- La figure 2 est une vue de côté partielle selon l'axe II-II de la figure 1;
- La figure 3 est une vue en coupe schématique du bâti selon un plan vertical;
- La figure 4 est une vue à plus grande échelle et plus détaillée de la figure 3;
- La figure 5 est une vue agrandie en coupe verticale du carter et des premiers et seconds moyens d'entraînement; et
- La figure 6 est une vue à échelle agrandie des moyens de guidage du carter en partie supérieure.

L'invention sera décrite ci-après en référence à un ensemble extracteur disposé dans un silo, étant entendu que l'invention peut être également appliquée à une aire de stockage, disposée à l'air libre.

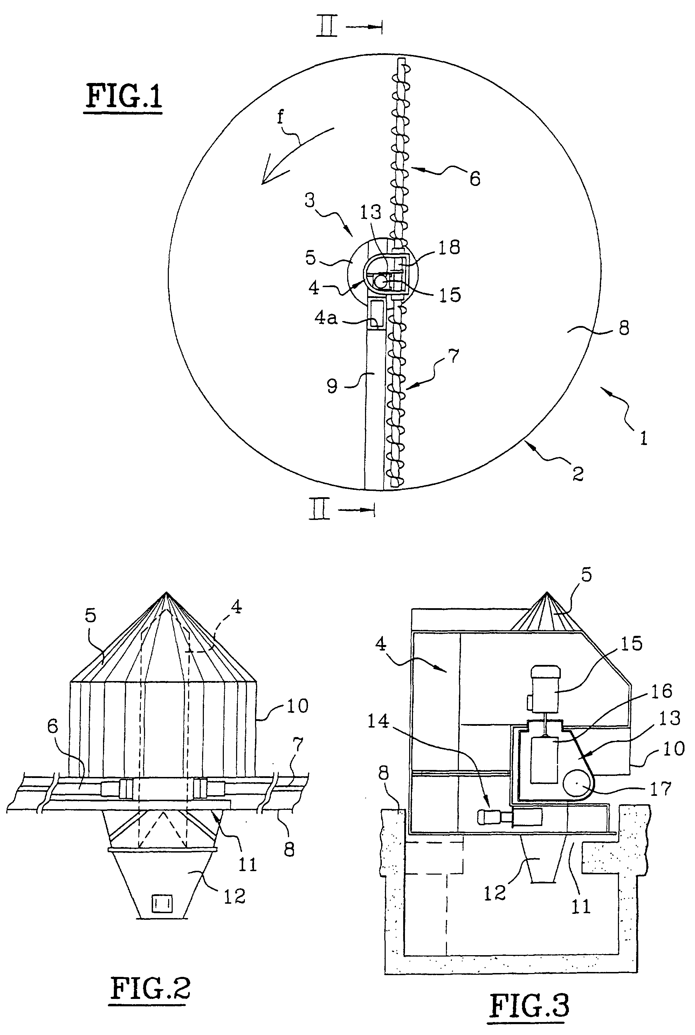

En référence à la figure 1, on a représenté en coupe selon un plan horizontal, un silo référencé 1, comportant une paroi cylindrique 2. Au centre du silo est disposé l'ensemble extracteur référencé 3 selon l'invention, et comportant un bâti 4 surmonté d'un cône de protection 5. Deux vis sans fin colinéaires, référencées 6 et 7, sont disposées sensiblement selon un diamètre du silo, et à proximité et parallèlement au fond du silo.

Les deux vis 6 et 7 sont animées d'un mouvement de rotation, d'une part autour de leur propre axe, en sens inverse l'une de l'autre, et d'autre part autour de l'axe central vertical du silo, selon un mouvement de rotation explicité ci-après.

Un orifice d'évacuation (non représenté, car étant situé juste en dessous du bâti 4 et du cône de protection 5) est prévu au centre du silo.

Les mouvements conjugués de rotation des vis, d'une part sur elles-mêmes, et d'autre part autour de l'axe vertical du silo, entraînent l'acheminement de la matière stockée dans le silo, vers l'orifice d'évacuation.

Les matières ou matériaux solides susceptibles d'être stockés dans le silo et acheminés par l'ensemble extracteur de l'invention, vers l'orifice d'évacuation, sont du type pulvérulentes ou en grains, ou tous types de matériaux similaires, susceptibles d'être stockés en silo, ou sur une aire à l'extérieur, et susceptibles d'être acheminés et déplacés par vis sans fin.

Les vis 6 et 7 colinéaires sont disposées selon une droite décalée légèrement par rapport à l'axe central du silo. Il en résulte que pendant leur mouvement de rotation sensiblement autour de l'axe central du silo, les vis laissent une zone « morte » qui n'est pas balayée par les vis. Cette zone est occupée par un élément radial 9, en relief par rapport au fond 8 du silo, de longueur équivalent à l'espace disponible entre l'extrémité distale 4a du bâti 4 et la paroi 2 cylindrique du silo, la largeur de l'élément en relief étant sensiblement équivalente à la largeur du bâti dans le sens circonférentiel, au niveau de la face 4a d'extrémité dudit bâti.

L'élément en relief 9 est réalisé par exemple en béton ou en panneaux métalliques soudés, et présente de préférence, une face supérieure inclinée ou présente deux faces inclinées, pour éviter la stagnation de la matière sur ledit élément en relief 9.

D'autres éléments techniques de fonctionnement et d'installation (connus en eux-mêmes) sont prévus, non représentés et non décrits, et l'homme de l'art pourra trouver dans le brevet numéro FR-A-76 05688 des informations concernant ces éléments connus.

On a représenté sur la figure 2 une vue de côté de l'ensemble extracteur selon l'invention, vu selon l'axe II-II de la figure 1.

On retrouve sur cette figure le bâti 4, le cône de protection 5, les vis 6 et 7 (montrées partiellement).

Le cône de protection 5 est prolongé vers le bas par une jupe 10. Sur le fond du silo 8 est prévue une ouverture 11 débouchant dans une trémie ou hotte 12 d'évacuation, reliée à des conduits d'évacuation vers l'extérieur (connus en eux-mêmes et non représentés), afin d'acheminer la matière extraite du silo vers des moyens de transport ou de traitement.

On a représenté sur la figure 3 une vue en coupe schématique selon un plan vertical, du bâti.

Celui-ci présente la forme générale d'un U, renversé à 90°. Pour les besoins de la compréhension, les parois extérieures délimitant le U formant le bâti 4 sont représentées en traits gras.

A l'intérieur du bâti en U renversé, est disposé un carter 13 monté à rotation à l'intérieur des deux branches horizontales du U, et entraîné en rotation par des seconds moyens d'entraînement décrits ultérieurement en détail, et incluant le bloc 14 moteur à motoréducteur.

Sur le carter 13 sont fixées les vis 6 et 7 (perpendiculaires à la figure 3). Les vis sont entraînées en rotation autour de leur axe par l'intermédiaire de premiers moyens d'entraînement, décrits ultérieurement en détail, et incluant notamment un moteur 15, un bloc réducteur 16 et une poulie 17 reliée à l'arbre commun 18 des deux vis 6 et 7 colinéaires.

Le bâti 4 est formé de préférence de panneaux métalliques soudés.

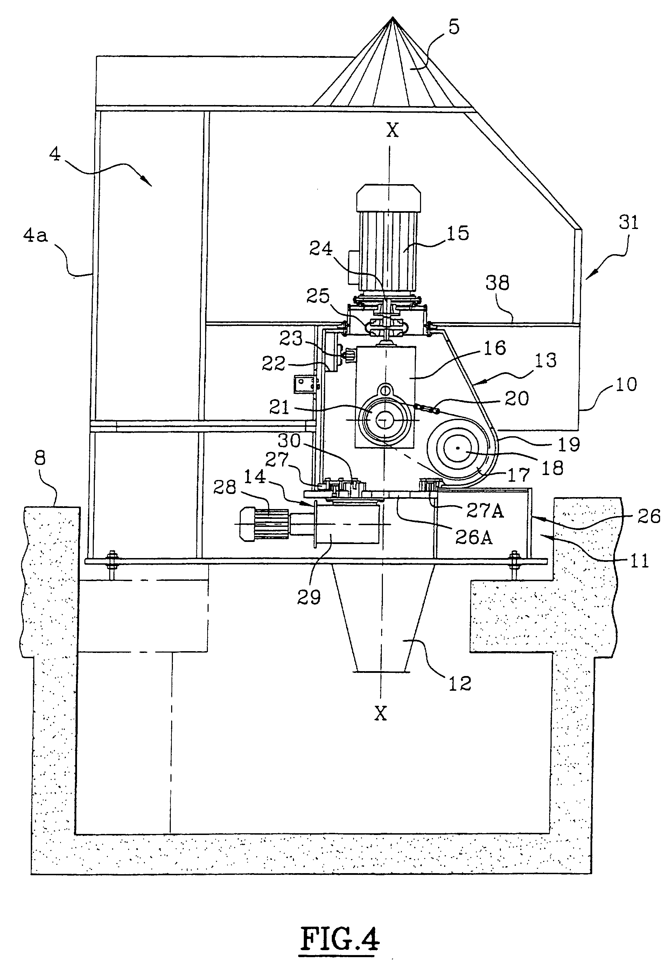

En référence à la figure 4, on a représenté à une échelle agrandie et avec plus de détails, l'ensemble extracteur montré sur la figure 3. On retrouve les éléments communs aux deux figures qui portent les mêmes références.

Le carter 13 présente une section droite, en coupe verticale, générale rectangulaire, allongée dans le sens vertical à l'exception d'une partie renflée 19 selon l'un des côtés verticaux. Cette partie renflée 19 abrite l'arbre 18 commun aux vis colinéaires 6 et 7 (non représentées), et est associée à la poulie 17 coopérant, par l'intermédiaire par exemple d'une chaîne 20, avec une poulie 21 prévue dans le bloc motoréducteur 16. Ce dernier est fixé sur la paroi intérieure latérale 22(opposée au renflement 19), par l'intermédiaire d'un moyen de fixation 23 connu en lui-même.

Le moteur 15 entraîne la poulie 21, à l'intérieur du bloc motoréducteur 16, par l'intermédiaire d'un arbre 24 et d'un joint d'entraînement amortisseur 25 connu en lui-même.

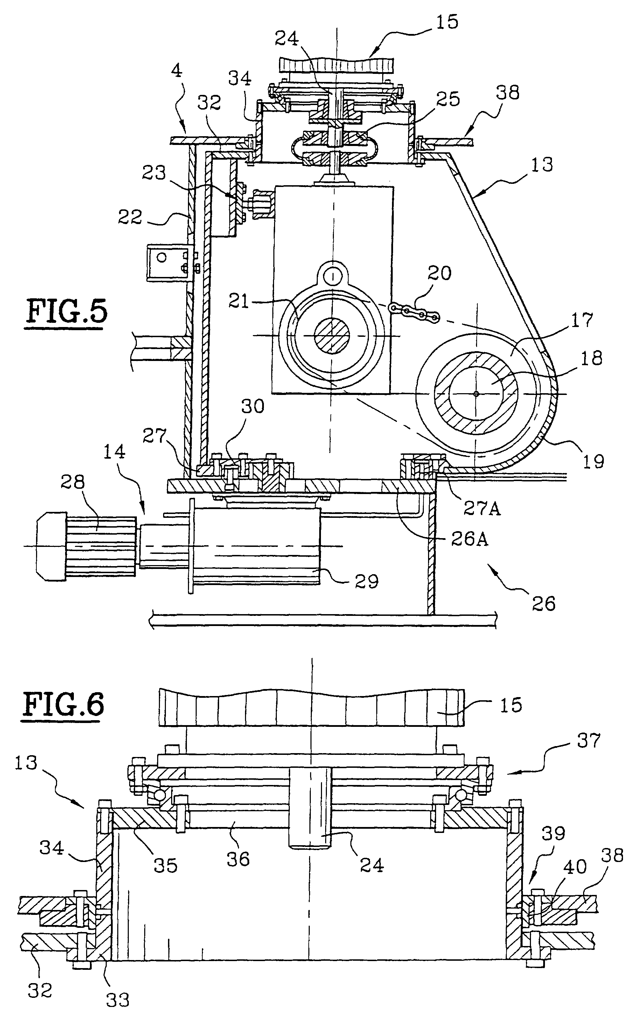

Il est fait référence, à ce stade, aux figures 4 et 5.

Le carter 13 repose par sa face inférieure, c'est-à-dire sa base, sur la branche inférieure 26 du U renversé formant le bâti 4, par l'intermédiaire d'une couronne 27.

La couronne 27 est dentelée sur sa périphérie intérieure et est centrée sur l'axe X-X.

La couronne 27 est associée à des roulements 27A à billes ou à aiguilles qui permettent de transmettre les efforts, résultant notamment du poids du carter, sur la face supérieure 26A de la branche inférieure 26 du bâti 4 en U.

Le carter 13 doit être entraîné en rotation, pour permettre l'entraînement en rotation des vis autour de l'axe X-X. A cette fin, il est prévu des seconds moyens d'entraînement constitués d'un bloc moteur à réducteur 14, incluant le moteur 28 et le bloc motoréducteur 29, aptes à transmettre, par l'intermédiaire d'un pignon 30, engréné sur la couronne 27, le mouvement de rotation du moteur 28 (d'axe horizontal) à la couronne 27.

La couronne 27 et les roulements à billes ou à aiguilles 27A associés présentent l'avantage de permettre le support du carter sur le bâti 4, et plus particulièrement sur la face supérieure 26A de la branche inférieure 26, dans des conditions optimales de solidité tout en permettant le mouvement de rotation du carter 13 autour de l'axe X-X, par rapport au bâti 4 fixe.

De plus, l'entraînement en rotation du carter est facilité par les seconds moyens d'entraînement incluant un pignon 30 et le motoréducteur 29. Les seconds moyens d'entraînement sont ainsi simples de conception et d'entretien. De plus, ils réalisent un entraînement direct du carter, ce qui évite les vibrations et autres phénomènes néfastes.

Le carter 13 est relié au bâti 4 en sa partie supérieure, de la manière décrite en détail ci-après, en référence aux figures 5 et 6.

A cette fin, le carter 13 est lié au bâti 4 en sa partie supérieure, par des moyens permettant un débattement relatif, de faible amplitude, entre le carter et la branche supérieure 31 du U renversé formé par le bâti 4.

Plus particulièrement, la face supérieure 32 (figure 5) du carter, présente un épaulement cylindrique 33 prolongé par une partie cylindrique 34 (centrée sur l'axe X-X), elle-même obturée partiellement en sa partie supérieure par une couronne 35, laissant un passage 36 libre ouvert central, pour l'arbre d'entraînement 24 du moteur 15.

Le moteur 15 est fixe et lié au bâti (par des moyens non représentés), alors que le carter 13 est entraîné en rotation comme explicité ci-dessus.

Le mouvement relatif entre le carter 13 tournant et le moteur fixe 15 est rendu possible par des moyens de liaison 37 (figure 6) et permettant au moteur 15 de reposer sur le carter, tout en autorisant ledit mouvement relatif carter/moteur.

Le carter 13 est lié à la face inférieure 38 de la branche supérieure 31 du U renversé formant le bâti 4, par l'intermédiaire de moyens de guidage portant la référence générale 39 (figure 6).

Les moyens de guidage autorisent un débattement axial (axe X-X) entre le carter, et plus-précisément la partie prolongée cylindrique 34 de celui-ci, et la face inférieure 38 de la branche supérieure 31 dudit U.

Les moyens de guidage 39 sont constitués par exemple d'une couronne 40, fixée par des moyens connus sur la face inférieure horizontale 38 du bâti. La couronne de guidage 40 présente une surface cylindrique sensiblement verticale contre laquelle est susceptible de glisser, avec un faible frottement, le prolongement 34 cylindrique faisant corps avec le carter 13. Le débattement est en général de quelques mm, résultant des déformations auxquelles est soumis le bâti 4 et notamment la branche supérieure 31, qui tend à s'affaisser vers le bas.

## Revendications

1. Ensemble extracteur pour matières solides, pulvérulentes ou en grains, stockées sur une aire ou dans un silo (1), du type comprenant au moins une vis sans fin (6, 7), destinée à évacuer la matière vers un orifice d'évacuation central (11) au-dessus duquel est disposé un bâti (4) en forme générale de U renversé à 90° et entre les branches horizontales (26, 31) duquel est disposé un carter (13) associé à des premiers moyens d'entraînement de la vis (6, 7) en rotation autour de son axe, et sur lequel la vis (6, 7) est fixée, le carter (13) et la vis (6, 7) étant entraînés en rotation autour d'un axe vertical (X) par des seconds moyens d'entraînement, ledit carter (13) reposant par sa base sur la branche horizontale inférieure (26) du bâti (4) en forme générale de U renversé à 90°, par l'intermédiaire d'une couronne (27) reliée à ladite branche (26) par des moyens autorisant le mouvement de rotation de l'ensemble vis (6, 7)/carter (13), **caractérisé en ce que** le carter (13) est maintenu en sa partie supérieure, par rapport à la branche supérieure (31) du bâti (4) en forme générale de U renversé à 90°, par des moyens de guidage (39), autorisant un léger débattement différentiel du carter (13) par rapport à ladite branche (31), le long de l'axe vertical (X).

2. Ensemble selon la revendication 1, **caractérisé en ce que** le carter (13) dépasse par rapport au plan formé par la branche supérieure (31) du bâti (4) en forme générale de U renversé à 90° que traverse une ouverture dont les bords sont pourvus desdits moyens de guidage (39).

3. Ensemble selon l'une des revendications 1 ou 2, **caractérisé en ce que** les moyens de guidage (39) comprennent une couronne (40) liée à la branche supérieure (31) du bâti (4) en forme générale de U renversé à 90° et contre laquelle est susceptible de glisser un prolongement cylindrique (34) faisant corps avec le carter (13).

4. Ensemble selon l'une des revendications 1 à 3, **caractérisé en ce que** les premiers moyens d'entraînement comportent un moteur (15), associé au carter (13) par des moyens de liaison (37) autorisant un mouvement relatif entre le carter (13) et le moteur (15).

5. Ensemble selon l'une des revendications 1 à 4, **caractérisé en ce que** les seconds moyens d'entraînement comportent un moteur (28) et un mécanisme d'entraînement (29, 30) associés à la couronne (27).

6. Ensemble selon la revendication 5, **caractérisé en ce que** la couronne (27) est dentelée et coopère avec un engrenage (30) lui-même associé audit moteur (28).

## Patentansprüche

1. Austragsvorrichtung für Feststoffe, pulverförmige Stoffe oder körniges Material, das auf einer Fläche oder in einem Silo (1) gelagert ist, mit mindestens einer Schnecke (6, 7), mit der das Material zu einer zentralen Austragsöffnung (11) hin ausgetragen werden soll, über der ein um 90 ° gedrehtes Gestell (4) in U-Form angeordnet ist, zwischen dessen horizontalen Stäben (26, 31) ein Gehäuse (13) angeordnet ist, das mit ersten Drehantriebsvorrichtungen der Schnecke (6, 7) um seine Achse verbunden ist, an der die Schnecke (6, 7) auch befestigt ist, wobei das Gehäuse (13) und die Schnecke (6,7) um eine Vertikalachse (X) herum durch zweite Drehantriebsvorrichtungen angetrieben werden; das Gehäuse (13) ruht mit seinem Sockel auf dem unteren Horizontalstab (26) des um 90 ° gedrehten Gestells (4) in U-Form mittels eines Kranzes (27), der über Vorrichtungen mit dem Stab (26) verbunden ist, die die Drehbewegung der Schnecke (6,7) / des Gehäuses (13) ermöglichen, **dadurch gekennzeichnet, dass** das Gehäuse (13) in seinem oberen Teil im Verhältnis zum oberen Stab (31) des um 90 ° gedrehten Gestells (4) in U-Form durch Führungen (39) gehalten wird, die eine leichte, differentielle Ausfederung des Gehäuses (13) im Verhältnis zum Stab (31) entlang der Vertikalachse (X) ermöglichen.

2. Vorrichtung nach Anspruch 1, **dadurch gekennzeichnet, dass** das Gehäuse (13) im Verhältnis zu der Ebene übersteht, die durch den oberen Stab (31) des um 90 ° gedrehten Gestells (4) in U-Form gebildet wird, das durch eine Öffnung hindurchgeht, deren Ränder mit den genannten Führungen (39) versehen sind.

3. Vorrichtung nach Anspruch 1 oder 2, **dadurch gekennzeichnet; dass** die Führungen (39) einen Kranz (40) besitzen, der mit dem oberen Stab (31) des um 90 ° gedrehten Gestells (4) in U-Form verbunden ist, und gegenüber dem sich eine zylindrische Verlängerung (34) verschieben kann, die zusammen mit dem Gehäuse (13) einen Hautteil bildet.

4. Vorrichtung nach einem der Ansprüche 1 bis 3, **dadurch gekennzeichnet, dass** die ersten Antriebsvorrichtungen einen Motor (15) besitzen, der über Verbindungselemente (37), die eine relative Bewegung zwischen dem Gehäuse (13) und dem Motor (15) ermöglichen, mit dem Gehäuse (13) verbunden ist.

5. Vorrichtung nach einem der Ansprüche 1 bis 4, **dadurch gekennzeichnet, dass** die zweiten Antriebsvorrichtungen einen Motor (28) und einen Antriebsmechanismus (29, 30) besitzen, der mit dem Kranz (27) verbunden ist.

6. Vorrichtung nach Anspruch 5, **dadurch gekennzeichnet, dass** der Kranz (27) gezahnt ist und mit einem Getriebe (30) zusammenarbeitet, das selbst mit dem genannten Motor (28) verbunden ist.

## Claims

1. Assembly for discharging solid, pulverulent or granular matter, stored over an area or in a silo (1), of the type comprising at least one endless screw (6, 7), intended to evacuate the matter towards a central evacuation orifice (11) above which is disposed a frame (4) generally in the shape of a U tipped over through 90° and between the horizontal arms (26, 31) of which is disposed a housing (13) associated with first means for driving the screw (6, 7) in rotation about its axis, and on which the screw (6, 7) is fixed, the housing (13) and the screw (6, 7) being driven in rotation about a vertical axis (X) by second drive means, said housing (13) resting by its base on the lower horizontal arm (26) of the frame (4) generally in the shape of a U tipped over through 90°, via a ring (27) connected to said arm (26) by means allowing the movement of rotation of the screw (6, 7)/housing (13) assembly, **characterized in that** the housing (13) is maintained in its upper part, with respect to the upper arm (31) of the frame (4) generally in the shape of a U tipped over through 90°, by guiding means (39), allowing a slight differential clearance of the housing (13) with respect to said arm (31) along the vertical axis (X).

2. Assembly according to Claim 1, **characterized in that** the housing (13) projects with respect to the plane formed by the upper arm (31) of the frame (4) generally in the shape of a U tipped over through 90°, which an opening, of which the edges are provided with said guiding means (39), traverses.

3. Assembly according to one of Claims 1 or 2, **characterized in that** the guiding means (39) comprise a ring (40) connected to the upper arm (31) of the frame (4) generally in the shape of a U tipped over through 90° and against which a cylindrical extension (34) integral with the housing (13) is capable of sliding.

4. Assembly according to one of Claims 1 to 3, **characterized in that** the first drive means comprise a motor (15) associated with the housing (13) by linking means (37), allowing a relative movement between the housing (13) and the motor (15).

5. Assembly according to one of Claims 1 to 4, **characterized in that** the second drive means comprise a motor (28) and a drive mechanism (29, 30) associated with the ring (27).

6. Assembly according to Claim 5, **characterized in that** the ring (27) is toothed and cooperates with a gear (30) itself associated with said motor (28).
